# EUROPÄISCHE PATENTSCHRIFT

(11) **EP 1 554 137 B1**
(45) Veröffentlichungstag und Bekanntmachung des Hinweises auf die Patenterteilung: **31.07.2013**
(21) Anmeldenummer: 03799460.5
(22) Anmeldetag: 23.10.2003
(51) Int. Cl.: B60G 21/055, H02K 7/06, B60G 17/02

(54) **WANKSTABILISATOR FÜR DAS FAHRWERK EINES KRAFTFAHRZEUGS**
ANTI-ROLL BAR FOR THE CHASSIS OF A MOTOR VEHICLE
BARRE STABILISATRICE POUR LE CHASSIS D'UN VEHICULE AUTOMOBILE

(30) Priorität: 25.10.2002 DE 10250058
(43) Veröffentlichungstag der Anmeldung: 20.07.2005
(73) Patentinhaber: Schaeffler Technologies AG & Co. KG, 91074 Herzogenaurach (DE)
(72) Erfinder: KRAUS, Manfred, 91074 Herzogenaurach (DE); OSTERLÄNGER, Jürgen, 91448 Emskirchen (DE); HOCHMUTH, Harald, 91469 Hagenbüchach (DE); DIRNBERGER, Thomas, 90587 Obermichelbach (DE); REIK, Wolfgang, 77815 Bühl (DE); PFUND, Thomas, 76547 Leiberstung (DE)
(86) Internationale Anmeldenummer: PCT/EP2003/011718
(87) Internationale Veröffentlichungsnummer: WO 2004/041560

(56) Entgegenhaltungen:
- EP-A- 1 057 667
- WO-A-01/53121
- FR-A- 2 654 391

## Beschreibung

### Gebiet der Erfindung

Die vorliegende Erfindung betrifft einen Wankstabilisator für das Fahrwerk eines Kraftfahrzeugs. Diese Stabilisatoren haben die Aufgaben, die Wankneigung des Aufbaus bei Kurvenfahrt zu verringern und das Kurvenverhalten zu beeinflussen, also die Fahrsicherheit zu erhöhen. Im Regelfall bleibt bei gleichseitiger Federung der Stabilisator wirkungslos.

Aus DE 100 02 455 A1 oder WO 01/53121 beispielsweise ist eine Stabilisatoranordnung für das Fahrwerk eines Fahrzeugs bekannt geworden, bei dem zwischen Stabilisatorhälften ein Aktuator angeordnet ist, der die beiden Stabilisatorhälften bedarfsweise gegeneinander um eine Drehachse verdreht. Die Verdrehung der beiden Stabilisatorhälften zueinander soll dabei dem Wanken des Aufbaus entgegen. Der Aktuator weist Kurvenbahnträger mit jeweils einer Kurvenbahn auf, in denen ein mittels eines Stellantriebes entlang dieser Kurvenbahnen verschiebbares Koppelelement geführt ist. Als Stellantrieb kann beispielsweise ein Kugelgewindetrieb vorgesehen sein, auf dessen Gewindespindel eine Spindelmutter angeordnet ist, die das Koppelelement trägt. Das Koppelelement umfasst quer zur Drehachse des Aktuators angeordnete Zapfen, auf denen Stützrollen drehbar gelagert sind. Diese Stützrollen greifen in die Kurvenbahnen der beiden Kurvenbahnträger ein. Unter Drehung der Gewindespindel verschiebt sich die Spindelmutter entlang der Drehachse des Aktuators, wobei die Stützrollen entlang der Kurvenbahnen abwälzen. Während dieser Stellbewegung findet aufgrund der Gestaltung der Kurvenbahnen eine Relativdrehung der beiden Kurvenbahnträger zueinander statt. Diese Relativdrehung erzeugt ein Drehmoment, dass dem unerwünschten Wanken entgegen gerichtet ist. Die eine Kurvenbahn ist etwa S-förmig ausgebildet, wobei das eine Ende der S-förmigen Kurvenbahn zum einen axialen Ende des Aktuators und das andere Ende der S-förmigen Kurvenbahn zum anderen axialen Ende des Aktuators gerichtet ist. Eine Neutralstellung oder Ausgangsstellung des Aktuators ist in Längsrichtung des Aktuators gesehen etwa in der Mitte der S-förmigen Kurvenbahn vorgesehen. Eine Verlagerung des Koppelelementes aus dieser Ausgangsposition erfolgt je nach der Wankrichtung zu dem einen oder zu dem anderen axialen Ende der S-förmigen Kurvenbahn hin. Um den Bauraum des Aktuators in axialer Richtung zu reduzieren können die beiden Kurvenbahnträger koaxial ineinander angeordnet sein. Aufgabe dieser Erfindung ist es, einen Wankstabilisator nach den Merkmalen des Oberbegriffs des Anspruchs 1 anzugeben, bei dem der axiale Bauraumbedarf weiter reduziert ist.

Erfindungsgemäß wird diese Aufgabe dadurch gelöst, dass die U- oder V-förmige Kurvenbahn des einen Kurvenbahnträgers zwei etwa U- oder V-förmig zueinander angeordnete Kurvenbahnschenkel aufweist, die spiegelsymmetrisch zu einer die Drehachse des Aktuators enthaltenden Längsmittelebene angeordnet sind. Je nach Wankrichtung wird das Koppelelement entweder in dem einen Kurvenbahnschenkel oder in dem anderen Kurvenbahnschenkel geführt und verlagert. Durch diese V-förmige Anordnung kann gegenüber der bekannten Lösung eine Halbierung der axialen Erstreckung der Kurvenbahn erreicht werden.

Die beiden Kurvenbahnschenkel vereinigen sich vorzugsweise in einer in der Längsmittelebene enthaltenen Schnittstelle. Das Koppelelement kann auf diese Weise ausgehend von der Schnittstelle je nach Bedarf in den einen Kurvenbahnabschnitt oder in den anderen Kurvenbahnabschnitt gelenkt werden.

Vorzugsweise ist in der Schnittstelle die Neutralstellung des Aktuators vorgesehen. Wenn beispielsweise als Kurvenbahnträger ein Rohrstück verwendet wird, kann die U- oder V-förmige Kurvenbahn problemlos an diesen Rohrstück ausgebildet werden. Um das Koppelelement in seiner Neutralstellung einwandfrei zu halten, kann in der Schnittstelle der beiden Kurvenbahmschenkel eine Halteposition für das Koppelelement ausgebildet sein. Wenn beispielsweise das Rohrstück als Kurvenbahnträger verwendet wird, kann die innere Wandung der Kurvenbahn im Bereich der Schnittstelle mit einem quer zur Drehachse des Aktuators angeordneten Plateau versehen sein. In seiner Ausgangsstellung ruht das Koppelelement auf dem Plateau. Wenn beispielsweise bei Kurvenfahrt dem Wanken entgegengesteuert werden muss, kann das Koppelelement mittels einer Steuereinrichtung von dem Plateau aus wahlweise in den einen Kurvenbahnschenkel oder in den anderen Kurvenbahnschenkel eingesteuert werden. Von dort aus findet eine Verlagerung des Koppelelementes immer in einer axialen Richtung statt, wobei der Drehsinn der Relativdrehung der beiden Stabilisatorhälften je nach dem ausgewählten Kurvenbahnschenkel im oder entgegen dem Uhrzeigersinn eintritt.

Zur Steuerung des Koppelelementes wird vorzugsweise ein Wankimpuls genutzt, der das Koppelelement zwangsweise in denjenigen Kurvenbahnschenkel einsteuert, von dem aus der Wankneigung ein Drehmoment entgegengesetzt werden kann.

Vorzugsweise umfasst die Steuerung eine Wippe, deren Wippachse quer zur Drehachse des Aktuators angeordnet ist. Das eine Wippenende greift vorzugsweise an dem Koppelelement und das andere Wippenende greift vorzugsweise an dem anderen Kurvenbahnträger an. Wenn nun beispielsweise in Folge einer Kurvenfahrt ein zwischen den Stabilisatorhälften wirkendes Drehmoment mit einem Drehsinn entgegengesetzt zum Uhrzeigersinn gerichtet ist, wird das an dem anderen Kurvenbahnträger angreifende Wippenende ebenfalls entgegensetzt zum Uhrzeigersinn ausgelenkt. Die Wippe dreht nun um ihre Wippachse, wobei das andere Wippenende mit dem Uhrzeigersinn verlagert wird. Unter dieser Verlagerung mit dem Uhrzeigersinn wird nun das Koppelelement ebenfalls mit dem Uhrzeigersinn weg von dem Plateau in den vorgesehenen Kurvenbahnabschnitt hinein verlagert. Nun kann unter Betätigung des Stellantriebes eine axiale Verlagerung des Koppelelementes in den Kurvenbahnen erfolgen, und der Wankneigung wirkungsvoll ein Drehmoment entgegengesetzt werden.

Die Kurvenbahn des anderen Kurvenbahnträgers ist parallel zur Drehachse des Aktuators ausgebildet. Derartige parallele Anordnungen lassen sich in besonders günstiger und einfacher Weise herstellen.

Nachstehend wird die Erfindung anhand eines in drei Figuren dargestellten Ausführungsbeispiels näher erläutert. Es zeigen:
- Figur 1: einen erfindungsgemäßen Wankstabilisator in perspektivischer Darstellung,
- Figur 2: den erfindungsgemäßen Wankstabilisator im Längsschnitt und
- Figur 3: eine schematische Darstellung der Funktionsweise des erfindungsgemäßen Wankstabilisators mit einer modifizierten Steuerung.

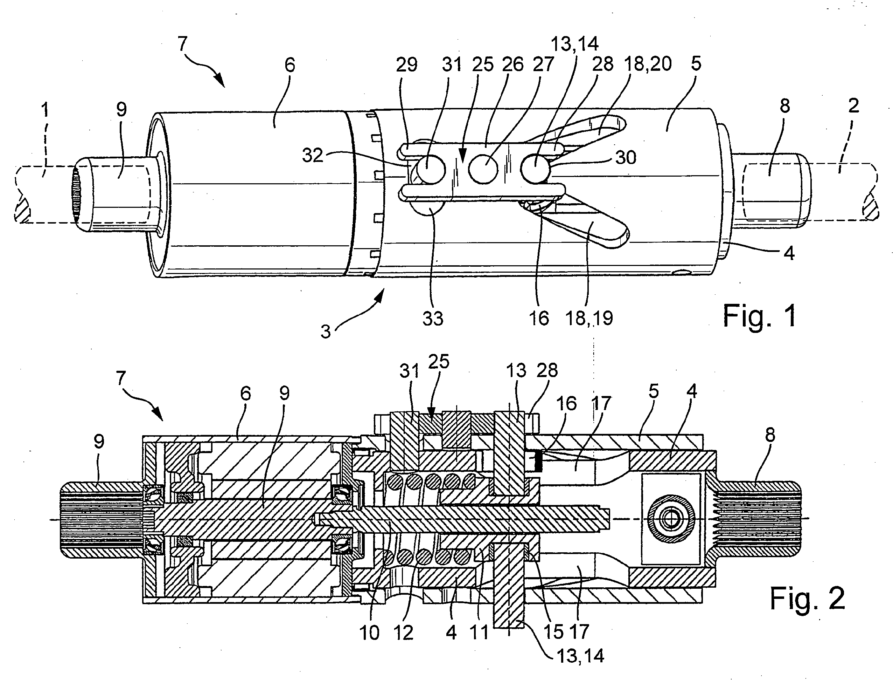

Der in den Figuren 1 bis 3 dargestellte erfindungsgemäßen Wankstabilisator für das Fahrwerk eines Kraftfahrzeuges umfasst Stabilisatorhälften 1, 2, die hier nur gestrichelt dargestellt sind. Zwischen den Stabilisatorhälften 1, 2 ist ein Aktuator 3 angeordnet, der auch das Kernstück der Erfindung darstellt. Der Aktuator 3 verdreht bedarfsweise die beiden Stabilisatorhälften 1, 2 um die Drehachse des Aktuators 3 zueinander.

Der Aktuator 3 weist zwei koaxial ineinander angeordnete Kurvenbahnträger 4, 5 auf. Die beiden Kurvenbahnträger 4, 5 sind rohrförmig ausgebildet und relativ zueinander drehbar. Der äußere Kurvenbahnträger 5 ist mit seinem in der Figur 2 linksseitigen Ende an einem Gehäuse 6 eines Elektromotors 7 befestigt. Der Kurvenbahnträger 4 und das Gehäuse 6 weisen an ihren einander abgewandten stirnseitigen Enden jeweils eine Zapfenaufnahme 8, 9 zur drehfesten Aufnahme der Enden der Stabilisatorhälften 1, 2 auf.

An einem Rotor 9 des Elektromotors 7 ist eine Gewindespindel 10 befestigt. Die Gewindespindel 10 ist koaxial zu den beiden Kurvenbahnträgern 4, 5 angeordnet. Auf der Gewindespindel 10 ist eine Spindelmutter 11 nach Art eines an sich bekannten Kugelgewindetriebes drehbar angeordnet. Eine Relativdrehung zwischen der Gewindespindel 10 und der Spindelmutter 11 wird in eine axiale Bewegung der Spindelmutter 11 gegenüber den Kurvenbahnträgern 4, 5 umgewandelt. Mit dieser Anordnung ist ein elektromechanischer Stellantrieb 11 a gebildet.

Eine koaxial auf der Gewindespindel 10 angeordnete Schraubendruckfeder 12 ist einerseits an dem Kurvenbahnträger 4 abgestützt und andererseits gegen die Spindelmutter 11 angefedert. Die Spindelmutter 11 trägt ein Koppelelement 13, das für eine Verdrehung der beiden Kurvenbahnträger 4, 5 zueinander erforderlich ist, wie weiter unten ausgeführt wird. Das Koppelelement 13 umfasst mehrere über den Umfang der Spindelmutter 11 verteilt angeordnete Stellzapfen 14, die sternförmig um die Drehachse des Akutators 3 herum angeordnet sind. Die Stellzapfen 14 sind in Radiallagern 15 um ihre Längsachse herum drehbar an der Spindelmutter 11 aufgenommen. Auf den Stellzapfen 14 sind Stützrollen 16 drehbar gelagert.

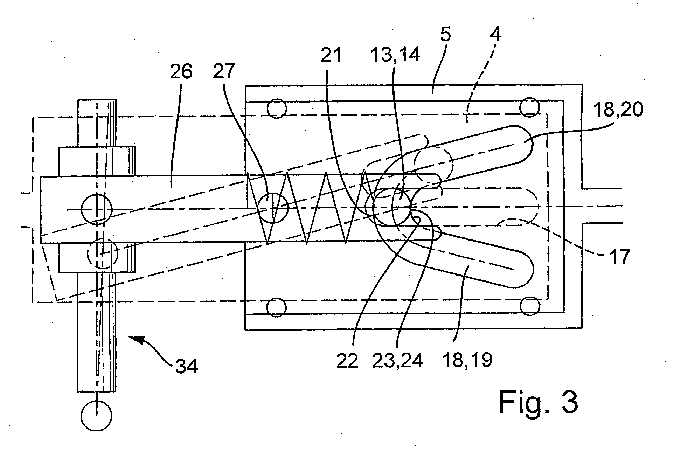

Der Kurvenbahnträger 4 ist an mehren über den Umfang verteilt angeordneten Stellen mit parallel zur Drehachse des Aktuators 3 angeordneten geradlinigen Kurvenbahnen 17 versehen. Der Kurvenbahnträger 5 ist an mehreren über seinen Umfang verteilt angeordneten Stellen jeweils mit einer V-förmigen Kurvenbahn 18 versehen, deren etwa V-förmig zueinander angeordnete Kurvenbahnschenkel 19, 20 spiegelsymmetrisch zu einer die Drehachse des Aktuators 3 enthaltenden Längsmittelebene angeordnet sind. Die V-förmige Kurvenbahn 18 bzw. deren Kurvenbahnschenkel 19, 20 sind deutlich den Figuren 1 und 3 zu entnehmen. Die Koppelelemente 13 koppeln die beiden Kurvenbahnträger 4, 5 miteinander. Zu diesem Zweck greifen die Stellzapfen 14 jeweils sowohl in die Kurvenbahn 17 als auch in die V-förmige Kurvenbahn 18 ein. Die Stützrollen 16 arbeiten mit der Kurvenbahn 17 zusammen, während die Stellzapfen 14 jeweils mit deren Umfang mit der V-förmigen Kurvenbahn 18 zusammenarbeitet. Die beiden Kurvenbahnschenkel 19, 20 jeder V-förmigen Kurvenbahn 18 schneiden sich in einer in der Längsmittelebene enthaltenen Schnittstelle 21 wie dies in der Figur 3 angedeutet ist. In einer Neutralstellung des Aktuators 3 ist das Koppelelement 14, dass heißt der Stellzapfen 14 in der Schnittstelle 21 angeordnet. Für eine einwandfreie Positionierung des Stellzapfens 14 ist vorliegend an der inneren Wandung 22 der V-förmigen Kurvenbahn 18 eine Halteposition 23 ausgebildet, wie dies der Figur 3 zu entnehmen ist. Diese Halteposition 23 für das Koppelelement 13, dass heißt hier den Stellzapfen 14, ist quer zu der Drehachse des Aktuators 3 angeordnet und bildet ein Plateau 24. Die Kurvenbahnen 17, 18 bilden gemeinsam mit dem Koppelelement 13 ein Kurvenbahngetriebe 23a.

Bei der vorliegenden Erfindung ist der elektromechanische Stellantrieb 11a vorgesehen, der den bereits beschriebenen Elektromotor 7 mit dem angeschlossenen Kugelgewindetrieb beinhaltet. Wenn einem Wanken des Fahrzeugaufbaus entgegengewirkt werden soll, werden bei aktiven Wankstabilisatoren die beiden Stabilisatorhälften entgegen dem wirksamen Wankmoment verdreht. Diese Verdrehung wird vorliegend dadurch erreicht, dass unter Betätigung des Elektromotors 7 die Spindelmutter 11 axial verlagert wird, wobei die jeweils in einer der beiden Kurvenbahnschenkel 19, 20 angeordneten Stellzapfen 14 entlang dieser Kurvenbahnschenkel 19, 20 verlagert werden. Das bedeutet, dass der äußere Kurvenbahnträger 5 gegenüber den Stellzapfen 14 und gegenüber dem Kurvenbahnträger 4 verdreht. Wenn der Stellzapfen 14 in dem Kurvenbahnschenkel 19 angeordnet ist, erfolgt eine Relativdrehung entgegen dem Uhrzeigersinn. Wenn der Stellzapfen 14 in dem Kurvenbahnschenkel 20 angeordnet ist, erfolgt eine Relativdrehung mit dem Uhrzeigersinn.

Je nach der Orientierung des anliegenden Wankmoments muss gewählt werden, in welchen der beiden Kurvenbahnschenkel 19, 20 der Stellzapfen 14 ausgehend von seiner Neutralposition in der Schnittstelle 21 gelenkt werden soll. Zu diesem Zweck ist gemäß den Figuren 1 und 2 eine Steuerung 25 vorgesehen, mittels der das Koppelelement 13 wahlweise aus der Neutralstellung heraus in einen der beiden Kurvenbahnschenkel 19, 20 eingelenkt werden kann. Diese Steuerung 25 umfasst eine Wippe 26, die um eine Wippachse 27 schwenkt. Die Wippachse 27 ist quer zu der Drehachse des Aktuators 3 angeordnet. Das eine Wippen-ende 28 greift an dem Koppelelement 13 und das andere Wippenende 29 greift an dem anderen Kurvenbahnträger 4 an. Im vorliegenden Ausführungsbeispiel greift der Stellzapfen 14 in eine U-förmige Aufnahme 30 der Wippe 26 an deren Wippenende 28 ein. An dem anderen Wippenende 29 greifen Zapfen 31 jeweils in eine U-förmige Aufnahme 32 am anderen Wippenende 29 ein. Die Wippachse 27 ist an dem Kurvenbahnträger 5 befestigt.

Diese Steuerung 25 kann in vorteilhafter Weise das Wankmoment nutzen, um das Koppelelement 13 in den entsprechenden Kurvenbahnschenkel 19, 20 der V-förmigen Kurvenbahn einzulenken. Wenn beispielsweise unter einem Wankmoment eine Relativdrehung zwischen den beiden Stabilisatorhälften 1, 2 im Uhrzeigersinn eingeleitet wird, verschwenkt der Zapfen 31 ebenfalls im Uhrzeigersinn und bewegt sich in Umfangsrichtung gegenüber dem Kurvenbahnträger 5. Diese Relativdrehung gegenüber dem Kurvenbahnträger 5 ist möglich, weil in dem Kurvenbahnträger 5 in Umfangsrichtung ausgebildete Nuten 33 ausgebildet sind, durch die der Zapfen 31 hindurch greift. Die Wippe 26 schwenkt mit ihrem Wippenende 29 nun ebenfalls im Uhrzeigersinn bzw. nach oben, wenn man Figur 1 zugrundetegt. Die Wippe 26 schwenkt nun mit ihrem Wippenende 28 entgegen dem Uhrzeigersinn, also nach unten wenn man Figur 1 zugrundelegt. Unter dieser Schwenkbewegung des Wippenendes 28 wird der Stellzapfen 14 von seiner Halteposition 23 weg und in den Kurvenbahnabschnitt 19 hinein verlagert. Die Schraubenfeder 12 drückt nun die Spindelmutter 11 axial nach rechts. Diese Bewegung wird unterstützt durch die Betätigung des Elektromotors 7, der die Gewindespindel 10 antreibt. Je weiter das Koppelelement 13 nach rechts verlagert wird, desto größer ist demzufolge die Verdrehung zwischen den beiden Kurvenbahnträgern 4, 5, so dass dem Wankmoment aktiv entgegengewirkt wird.

Die Schraubenfeder 12 entlastet den Elektromotor 7. In der Startphase des Elektromotors 7 unterstützt die vorgespannte Schraubenfeder 12 mit ihrer vollen Vorspannkraft den gewünschten Stellvorgang. Über eine geeignete Regelung kann nun der Motor 7 derart angesteuert werden, dass nach dem Wegfall des Wankmoments das Koppelelement 13 wieder in seiner Neutralstellung angeordnet ist, wobei dann die Schraubendruckfeder 12 wieder ihre volle Vorspannkraft erreicht hat.

Figur 3 zeigt in schematischer Darstellung eine alternative Steuerung 34, bei der die Wippe 26 über einen elektrisch angetriebenen Stellmotor 35 betätigt wird. Ebenso wie bei der zuvor beschriebenen Steuerung erfolgt ein Anlenken der Wippe 26 in eine der beiden Drehrichtungen abhängig von dem ermittelten Wankmoment.

### Positionszahlenliste

| | | | |
|---|---|---|---|
| 1 | Stabilisatorhälfte | 27 | Wippachse |
| 2 | Stabitisatorhälfte | 28 | Wippenende |
| 3 | Aktuator | 29 | Wippenende |
| 4 | Kurvenbahnträger | 30 | Aufnahme |
| 5 | Kurvenbahnträger | 31 | Zapfen |
| 6 | Gehäuse | 32 | Aufnahme |
| 7 | Elektromotor | 33 | Nut |
| 8 | Zapfenaufnahme | 34 | Steuerung |
| 9 | Zapfenaufnahme | 35 | Stellmotor |
| 9a | Rotor | | |
| 10 | Gewindespindel | | |
| 11 | Spindelmutter | | |
| 11a | Stellantrieb | | |
| 12 | Schraubenfeder | | |
| 13 | Koppelelement | | |
| 14 | Stellzapfen | | |
| 15 | Radiallager | | |
| 16 | Stützrölle | | |
| 17 | Kurvenbahn | | |
| 18 | V-förmige Kurvenbahn | | |
| 19 | Kurvenbahnschenkel | | |
| 20 | Kurvenbahnschenkel | | |
| 21 | Schnittstelle | | |
| 22 | innere Wandung | | |
| 23 | Halteposition | | |
| 23a | Kurvenbahngetriebe | | |
| 24 | Plateau | | |
| 25 | Steuerung | | |
| 26 | Wippe | | |

## Patentansprüche

1. Wankstabilisator für das Fahrwerk eines Kraftfahrzeuges, mit einem zwischen Stabilisatorhälften (1, 2) angeordneten und diese bedarfsweise gegeneinander um eine Drehachse verdrehenden Aktuator (3), dessen den Stabilisatorhälften (1, 2) zugeordnete Kurvenbahnträger (4, 5) jeweils mit einer Kurvenbahn (17, 18) versehen sind, in denen ein mittels eines Stellantriebes (7, 10) entlang dieser Kurvenbahnen (17, 18) verschiebbares Koppelelement (13) geführt ist, **dadurch gekennzeichnet, daß** die U- oder V-förmige Kurvenbahn (18) des einen Kurvenbahnträgers (5) zwei etwa U- oder V-förmig zweihander angeordnete kurvenbahnschenkei (19, 20) aufweist, die spiegelsymmetrisch zu einer die Drehachse des Aktuators (3) enthaltenen Längsmittelebene angeordnet sind.

2. Wankstabilisator nach Anspruch 1, bei dem sich die Kurvenbahnschenkel (19, 20) in einer in der Längsmittelebene enthaltenen Schnittstelle (21) vereinigen.

3. Wankstabilisator nach Anspruch 2, bei dem das Koppelement (13) in seiner Neutralstellung in der Schnittstelle (21) der beiden Kurvenbahnschenkel (19, 20) angeordnet ist.

4. Wankstabilisator nach Anspruch 2, bei dem in der Schnittstelle (21) der beiden Kurvenbahnschenkel (19, 20) eine Halteposition (23) für das Koppelelement (13) ausgebildet ist.

5. Wankstabilisator nach Anspruch 4, bei dem die innere Wandung der Kurvenbahn (18) im Bereich der Schnittstelle (21) mit einem als Halteposition für das Koppelelement (13) ausgebildeten, quer zu der Drehachse des Aktuators angeordneten Plateau (24) versehen ist.

6. Wankstabilisator nach Anspruch 3, bei dem eine Steuerung (25) vorgesehen ist, mittels der das Koppelelement (13) wahlweise aus der Neutralstellung heraus in einen der beiden Kurvenbahnschenkel (19, 20) eingelenkt ist.

7. Wankstabilisator nach Anspruch 6, bei dem die Steuerung eine Wippe (26) aufweist, deren Wippachse quer zur Drehachse des Aktuators (3) angeordnet ist.

8. Wankstabilisator nach Anspruch 7, bei dem das eine Wippenende (28) an dem Koppelelement (13) und das andere Wippenende (29) an dem anderen Kurvenbahnträger (4) angreift.

9. Wankstabilisator nach Anspruch 1, bei dem die geradlinige Kurvenbahn (17) des anderen Kurvenbahnträgers (4) parallel zur Drehachse des Aktuators (3) ausgebildet ist.

## Claims

1. Anti-roll bar for the chassis of a motor vehicle, with an actuator (3) which is arranged between anti-roll bar halves (1, 2) and rotates the latter counter to each other about an axis of rotation as required and the curved path supports (4, 5) of which, which are assigned to the anti-roll bar halves (1, 2), are each provided with a curved path (17, 18), in which a coupling element (13) which is displaceable along said curved path (17, 18) by means of an actuating drive (7, 10) is guided, **characterized in that** the U- or V-shaped curved path (18) of one curved path support (5) has two curved path branches (19, 20) which are arranged in an approximately U- or V-shaped manner with respect to each other and are arranged mirror-symmetrically with respect to a longitudinal centre plane containing the axis of rotation of the actuator (3).

2. Anti-roll bar according to Claim 1, in which the curved path branches (19, 20) are combined in an intersecting point (21) contained in the longitudinal centre plane.

3. Anti-roll bar according to Claim 2, in which the coupling element (13), in the neutral position thereof, is arranged in the intersecting point (21) of the two curved path branches (19, 20).

4. Anti-roll bar according to Claim 2, in which a retaining position (23) for the coupling element (13) is formed in the intersecting point (21) of the two curved path branches (19, 20).

5. Anti-roll bar according to Claim 4, in which the inner wall of the curved path (18) in the region of the intersecting point (21) is provided with a plateau (24) which is designed as the retaining position for the coupling element (13) and is arranged transversely with respect to the axis of rotation of the actuator.

6. Anti-roll bar according to Claim 3, in which a controller (25) is provided and is used to alternately steer the coupling element (13) out of the neutral position into one of the two curved path branches (19, 20).

7. Anti-roll bar according to Claim 6, in which the controller has a rocker (26), the rocker axis of which is arranged transversely with respect to the axis of rotation of the actuator (3).

8. Anti-roll bar according to Claim 7, in which one rocker end (28) acts on the coupling element (13) and the other rocker end (29) acts on the other curved path support (4).

9. Anti-roll bar according to Claim 1, in which the rectilinear curved path (17) of the other curved path support (4) is formed parallel to the axis of rotation of the actuator (3).

## Revendications

1. Barre stabilisatrice antiroulis pour le châssis d'un véhicule automobile, comprenant un actionneur (3) disposé entre des moitiés de barre stabilisatrice (1, 2) et faisant tourner celles-ci au besoin l'une par rapport à l'autre autour d'un axe de rotation, les supports de voie de guidage (4, 5) de l'actionneur, associés aux moitiés de barre stabilisatrice (1, 2), étant à chaque fois pourvus d'une voie de guidage (17, 18), dans lesquelles voies est guidé un élément d'accouplement (13) pouvant être déplacé le long de ces voies de guidage (17, 18) au moyen d'un entraînement de commande (7, 10), **caractérisée en ce que** la voie de guidage en forme de U ou de V (18) de l'un des supports de voie de guidage (5) présente deux branches de voie de guidage (19, 20) disposées en forme de U ou de V l'une par rapport à l'autre, qui sont disposées avec une symétrie spéculaire par rapport à un plan médian longitudinal contenant l'axe de rotation de l'actionneur (3).

2. Barre stabilisatrice antiroulis selon la revendication 1, dans laquelle les branches de voie de guidage (19, 20) se rejoignent au niveau d'une intersection (21) contenue dans le plan médian longitudinal.

3. Barre stabilisatrice antiroulis selon la revendication 2, dans laquelle l'élément d'accouplement (13) est disposé dans sa position neutre au niveau de l'intersection (21) des deux branches de voie de guidage (19, 20).

4. Barre stabilisatrice antiroulis selon la revendication 2, dans laquelle, au niveau de l'intersection (21) des deux branches de voie de guidage (19, 20), est réalisée une position de retenue (23) pour l'élément d'accouplement (13).

5. Barre stabilisatrice antiroulis selon la revendication 4, dans laquelle la paroi interne de la voie de guidage (18) dans la région de l'intersection (21) est pourvue d'un plateau (24) réalisé en tant que position de retenue pour l'élément d'accouplement (13), disposé transversalement à l'axe de rotation de l'actionneur.

6. Barre stabilisatrice antiroulis selon la revendication 3, dans laquelle une commande (25) est prévue, laquelle permet d'engager l'élément d'accouplement (13) de manière sélective hors de la position neutre dans l'une des deux branches de voie de guidage (19, 20).

7. Barre stabilisatrice antiroulis selon la revendication 6, dans laquelle la commande présente une bascule (26) dont l'axe de bascule est disposé transversalement à l'axe de rotation de l'actionneur (3).

8. Barre stabilisatrice antiroulis selon la revendication 7, dans laquelle l'une des extrémités de la bascule (28) vient en prise avec l'élément d'accouplement (13) et l'autre extrémité de la bascule (29) vient en prise avec l'autre support de voie de guidage (4).

9. Barre stabilisatrice antiroulis selon la revendication 1, dans laquelle la voie de guidage rectiligne (17) de l'autre support de voie de guidage (4) est réalisée parallèlement à l'axe de rotation de l'actionneur (3).
